(19) **Europäisches Patentamt**
**European Patent Office**
**Office européen des brevets**

(11) **EP 4 356 493 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **22737380.0**

(22) Anmeldetag: **15.06.2022**

(51) Internationale Patentklassifikation (IPC):
***H02J 3/26*** *(2006.01)*

(52) Gemeinsame Patentklassifikation (CPC):
**H02J 3/26**

(86) Internationale Anmeldenummer:
**PCT/EP2022/066269**

(87) Internationale Veröffentlichungsnummer:
**WO 2023/280535 (12.01.2023 Gazette 2023/02)**

(54) **STEUERUNG VON ENERGIEAUSTAUSCHEN ZWISCHEN MEHREREN AN EINEM STROMNETZ ANGESCHLOSSENEN ANLAGEN**

CONTROL OF ENERGY EXCHANGES BETWEEN A PLURALITY OF SYSTEMS CONNECTED TO A POWER SUPPLY

COMMANDE DES ÉCHANGES D'ÉNERGIE ENTRE PLUSIEURS SYSTÈMES RELIÉS À UN RÉSEAU ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2021   EP 21184318**

(43) Veröffentlichungstag der Anmeldung:
**24.04.2024   Patentblatt 2024/17**

(73) Patentinhaber: **Siemens Aktiengesellschaft**
**80333 München (DE)**

(72) Erfinder:
- **KALYSH, Ileskhan**
**52070 Aachen (DE)**
- **SCHRECK, Sebastian**
**90429 Nürnberg (DE)**

(74) Vertreter: **Siemens Patent Attorneys**
**Postfach 22 16 34**
**80506 München (DE)**

(56) Entgegenhaltungen:
**DE-A1- 102018 222 753     US-A1- 2014 031 997**

**Beschreibung**

Die Erfindung betrifft ein Verfahren gemäß dem Oberbegriff des Patentanspruches 1 sowie eine Steuereinheit gemäß dem Oberbegriff des Patentanspruches 8.

In den vergangenen Jahren hat sich die Anzahl von erneuerbaren Anlagen, die geringe bis keine Kohlenstoffdioxidemissionen (englisch: Low Carbon Technologies; abgekürzt LCT), aufweisen, deutlich erhöht. Hierbei sind diese LCT-Anlagen typischerweise an ein dreiphasiges Mittelspannungsnetz oder dreiphasiges Niederspannungsnetz angeschlossen.

LCT-Anlagen umfassen Photovoltaikanlagen, Kraft-Wärme-Kopplungs-Anlagen, sowie elektrische Fahrzeuge oder Wärmepumpen. Typischerweise sind die Anlagen an genau einer Phase des Stromnetzes angeschlossen.

Aufgrund der dynamischen Last oder Erzeugung von LCT-Anlagen kann dies zu einer ungleichmäßigen Belastung der Phasen des Stromnetzes führen. Allerdings ist es für einen technisch effizienten und sicheren Betrieb eines mehrphasigen Stromnetzes erforderlich, das Ungleichgewichte zwischen seinen Phasen so gering wie technisch möglich gehalten werden.

Ein Ungleichgewicht zwischen den Phasen, das heißt eine Phasenasymmetrie, kann zu einer ineffektiven Verwendung der Netzressourcen führen. Hierbei führt die Phasenasymmetrie dazu, dass einzelne Phasen deutlich mehr als die weiteren Phasen belastet werden. Hierbei sind stark belastete Phasen und Transformatoren störanfälliger und müssen regelmäßiger gewartet oder ausgetauscht werden.

Weiterhin können Komponenten des Stromnetzes durch eine ausgeprägte Phasenasymmetrie thermisch überlastet werden. Je höher die Stromasymmetrie, desto höher die Stromstärke, die durch einen Neutralleiter fließt. Hohe Ströme belasten die Isolatoren zusätzlich thermisch, was zu Isolationsfehlern oder einer verkürzten Nutzungsdauer der Anlagen führt.

Ferner kann es zur Verletzung von Spannungsgrenzen beziehungsweise Spannungsbändern kommen. Eine stärker belastete Phase erfährt einen größeren Spannungsabfall, während die Phasen-Neutral-Spannung der schwächer belasteten Phase steigt. Wenn sich der Spannungspegel außerhalb des akzeptablen Spannungsbereichs, beispielsweise plus/minus fünf Prozent, verschiebt, verursacht dies ein Sicherheitsproblem und ein Betriebsrisiko für angeschlossene Verbraucher.

Darüber hinaus könnten aufkommende dezentrale Ansätze, wie beispielsweise lokale Energiemärkte, nicht eingesetzt werden, wenn es aufgrund ungleicher Belastungen von Phasen zu Verletzung von technischen Grenzwerten kommt.

Aus dem Stand der Technik sind lediglich statische Verfahren zur Vermeidung von Phasenasymmetrien bekannt, die nicht ausreichend schnell auf die dynamischen Änderungen von erneuerbaren beziehungsweise volatilen Anlagen (LCT-Anlagen) reagieren können.

US 2014/031997 A1 offenbart die Steuerung des Energieaustauschs zwischen mehreren, an einem Stromnetz angeschlossenen Anlagen, auf der Basis von Lastvorhersagen. Jede Anlage ist an einer oder mehreren Phasen angeschlossen.

DE 10 2018 222753 A1 offenart das Konzept lokaler Energiemärkte mit Optimierung.

Der vorliegenden Erfindung liegt die Aufgabe zugrunde, ein verbessertes Verfahren zur Reduzierung von Phasenasymmetrien innerhalb eines mehrphasigen Stromnetzes bereitzustellen.

Die Aufgabe wird durch ein Verfahren mit den Merkmalen des unabhängigen Patentanspruches 1 sowie durch eine Steuereinheit mit den Merkmalen des unabhängigen Patentanspruches 8 gelöst. In den abhängigen Patentansprüchen sind vorteilhafte Ausgestaltungen und Weiterbildungen der Erfindung angegeben.

Das erfindungsgemäße Verfahren zur Steuerung eines oder mehrerer Energieaustausche zwischen mehreren Anlagen mittels einer Steuereinheit, wobei jede Anlage an einer oder mehreren Phasen *A,B,C* eines dreiphasigen Stromnetzes angeschlossen ist, wobei die Steuereinheit zur Steuerung der Energieaustausche innerhalb eines Zeitbereiches T für jede der Phasen *A,B,C* und für jede der Anlagen zugehörige auszutauschende zeitabhängige Leistungen mittels eines Optimierungsverfahrens durch ein Extremalisieren einer Zielfunktion ermittelt, ist gekennzeichnet dadurch, dass durch die Zielfunktion eine Phasendifferenz

$$\sum_{t \in T} g(|P_t^A - P_t^B| + |P_t^B - P_t^C| + |P_t^C - P_t^A|)$$

als Term umfasst wird, wobei $P_t^{A,B,C}$ jeweils die Summe aller über die jeweilige Phase *A,B,C* zum Zeitpunkt *t* auszutauschenden Leistungen, und g > 0 ein Gewichtungsfaktor ist.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere wird das Optimierungsverfahren mittels einer Recheneinheit der Steuereinheit durchgeführt.

Das Stromnetz ist bevorzugt als Mittelspannungsnetz und/oder Niederspannungsnetz ausgebildet.

Das erfindungsgemäße Verfahren ist ein Verfahren zur Steuerung eines Stromnetzes, sodass eine Phasenasymmetrie zwischen den Phasen des Stromnetzes reduziert oder vermieden wird. Hierzu ist es erfindungsgemäß vorgesehen die Energieaustausche beziehungsweise Leistungsaustausche zwischen mehreren am Stromnetz angeschlossenen Anlagen zu steuern. Mit anderen Worten bildet das erfindungsgemäße Verfahren ebenfalls ein Verfahren zur Reduzierung von Phasenasymmetrien zwischen den Phasen eines mehrphasigen Stromnetzes aus.

Vorliegend werden ein Energieaustausch und ein Leistungsaustauch als äquivalent angesehen. Wird über einen bestimmten Zeitbereich eine gegebenenfalls zeitabhängige elektrische Leistung durch eine der Anlagen bereitgestellt, erzeugt und/oder verbraucht, so korrespondiert hierzu eine bestimmte elektrische Energiemenge, die innerhalb des genannten Zeitbereiches ausgetauscht (Energieaustausch) wird, das heißt über das Stromnetz übertragen wird. Hierbei kann die Leistung innerhalb des Zeitbereiches zeitlich variieren oder konstant sein. Ein Energieaustausch ist somit eine Einspeisung und/oder eine Ausspeisung von elektrischer Energie in das Stromnetz beziehungsweise aus dem Stromnetz durch die Anlagen.

Die Anlagen sind an einer oder mehreren Phasen des Stromnetzes angeschlossen. Typischerweise ist eine Anlage entweder genau an einer der Phasen oder an allen Phasen des Stromnetzes angeschlossen. Mehrphasig angeschlossene Anlagen sind beispielsweise Photovoltaikanlage mit einer Spitzenleistung größer als 10 Kilowatt oder Ladesäulen für elektrische Fahrzeuge mit einer Ladeleistung größer als 10 Kilowatt.

Typischerweise sind mehrere Anlagen einem Energiesystem zugeordnet. Ein solches Energiesystem, beispielsweise ein Bürogebäude oder ein Wohngebäude, kann somit eine oder mehrere der Anlagen umfassen. Hierbei sind die Energiesysteme die Anschlussnehmer bezüglich des Stromnetzes. Mit anderen Worten sind mehrere Energiesysteme an das Stromnetz angeschlossen, die ebenfalls über das Stromnetz elektrische Energie/Leistung austauschen. Hierbei umfassen die Energiesysteme eine oder mehrere energietechnische Anlagen, die gesteuert werden. Somit werden ebenfalls die Energieaustausche zwischen den Energiesystemen gesteuert. Die Energiesysteme sind typischerweise an allen drei Phasen des Stromnetzes angeschlossen. Die Anlagen des jeweiligen Energiesystems können an einer oder mehreren der Phasen des Stromnetzes über den Anschlusspunkt ihres Energiesystems angeschlossen sein.

Gemäß der vorliegenden Erfindung werden die zeitabhängigen Leistungen, die zwischen den Anlagen ausgetauscht werden sollen, wenigstens innerhalb des Zeitbereiches *T,* beispielsweise über einen Tag, mittels des Optimierungsverfahrens berechnet. Hierbei ist der Zeitbereich *T* typischerweise ein zukünftiger Zeitbereich. Mit anderen Worten wird ermittelt, welche zeitabhängige (elektrische) Leistung eine Anlage innerhalb des zukünftigen Zeitbereiches *T* bereitstellt, erzeugt und/oder verbraucht. Hierbei können die jeweiligen Leistungen innerhalb des Zeitbereiches *T* zeitabhängig sein. Wird der Zeitbereich *T* in diskrete Zeitschritte beziehungsweise Zeitpunkte unterteilt, so werden die Leistungen für jeden dieser Zeitschritte ermittelt. Mit anderen Worten ist in diesem Fall $T = [t_1, \dots, t_n]$ und beispielsweise für eine der Anlagen $P = [P_1, \dots, P_n]$ und $E = \Sigma_{i=1,\dots,n} P_i \cdot \Delta t$, wobei $\Delta t$ die Zeitschrittweite der Diskretisierung des Zeitbereiches *T* bezeichnet. Hierbei ist noch zu unterscheiden, über welche Phase die Leistung beziehungsweise Energie ausgetauscht wird.

Durch das Optimierungsverfahren werden die zeitabhängigen Leistungen beziehungsweise ihre Werte für jede der Anlagen ermittelt. Hierzu wird eine Zielfunktion extremalisiert, das heißt es wird numerisch ein Minimum oder Maximum der Zielfunktion ermittelt. Die Zielfunktion ist hierbei von den Leistungen der Anlagen abhängig, sodass ermittelt wird, bei welchen Leistungen beziehungsweise für welche Werte der Leistungen die Zielfunktion minimal oder maximal ist. Hierbei wird die Zielfunktion typischerweise durch die auszutauschende Gesamtenergiemenge gebildet. In diesem Fall wird die Zielfunktion maximiert, sodass die gesamte (lokal) zwischen den Energiesystemen beziehungsweise den Anlagen ausgetauschte Energiemenge maximiert wird. Die derart ermittelten Leistungen beziehungsweise Leistungswerte werden dann der Steuerung zugrunde gelegt, sodass schließlich die Anlagen innerhalb des Zeitbereiches *T* mit den ermittelten beziehungsweise berechneten Leistungen betrieben werden. Mit anderen Worten bilden die ermittelten Leistungen Sollwerte für die Steuerung oder Regelung der Anlagen und somit für die Steuerung der Energieaustausche für den Zeitbereich *T* aus. Somit basiert die Steuerung der Energieaustausche auf den ermittelten Leistungen. Gemäß den ermittelten Leistungen ist somit festgelegt, welche Anlage zu welchem Zeitpunkt welche Leistung einspeist oder ausspeist. Entsprechend der ermittelten Leistungen werden die Anlagen dann betrieben. Die Ermittlung der auszutauschenden Leistungen kann hierbei für mehrere Zeitbereiche regelmäßig wiederholt werden.

Gemäß der vorliegenden Erfindung umfasst die Zielfunktion den weiteren Term

$$\sum_{t \in T} g(|P_t^A - P_t^B| + |P_t^B - P_t^C| + |P_t^C - P_t^A|).$$ Dieser quantifiziert eine Phasendifferenz beziehungsweise eine Phasenasymmetrie zwischen den Phasen des Stromnetzes. Hierbei ist die Phasenasymmetrie durch die betragsmäßige (Gesamt-)Leis-tungsdifferenz zwischen der Phase *A* und der Phase *B,* durch die betragsmäßige (Gesamt-)Leistungsdifferenz zwischen der Phase *B* und der Phase *C* und durch die betragsmäßige (Gesamt-)Leistungsdifferenz zwischen der Phase *C* und der Phase *A* gebildet. Die gesamte Asymmetrie zwischen den Phasen (Phasendifferenz oder Phasendifferenzterm) wird anschließend durch die gewichtete Summe der genannten (Gesamt-)Leistungs-differenzen über alle Zeitpunkte $t$ des Zeitbereiches $T$ beziehungsweise Zeitperiode gebildet. Mit anderen Worten wird

$$g(|P_t^A - P_t^B| + |P_t^B - P_t^C| + |P_t^C - P_t^A|)$$ für jeden Zeitschritt beziehungsweise Zeitpunkt $t$ des Zeitbereiches

$T$ minimiert. Hierbei ist $P_t^{A,B,C}$ die gesamte Leistung, die zum Zeitpunkt $t$ an der Phase $A$, $B$ beziehungsweise $C$ anliegt.

Der Phasendifferenzterm wird hierbei derart durch die Zielfunktion umfasst, dass dieser bei der Extremalisierung der Zielfunktion, insbesondere bei ihrer Maximierung, minimiert wird. Dies kann durch ein entsprechendes Vorzeichen des Phasendifferenzterms sichergestellt werden.

Ein weiterer Grundgedanke der vorliegenden Erfindung ist es, den Gewichtungsfaktor $g$ vorzusehen. Der Gewichtungsfaktor gewichtet die Phasendifferenz zwischen zwei Phasen stärker, sodass dadurch festgelegt werden kann, ob eine der Phasen bevorzugt wird, und wie stark diese bevorzugt wird. Der Gewichtungsfaktor kann vorab festgelegt beziehungsweise eingestellt werden. Typischerweise umfasst die Zielfunktion mehrere Terme, sodass durch den Gewichtungsfaktor die Bedeutung der Phasensymmetrie gegenüber diesen weiteren Termen gewichtet werden kann. Beispielsweise umfasst die Zielfunktion die gesamt auszutauschende Energiemenge, die maximiert werden soll. Durch den Gewichtungsfaktor kann die ausgetauschte Gesamtenergiemenge gegenüber der Phasensymmetrie gewichtet werden. Mit anderen Worten kann in diesem Fall der Austausch einer maximalen Energiemenge, gegebenenfalls auf Kosten einer größeren Phasenasymmetrie, bevorzugt werden. Typischerweise erfolgt für einen numerisch kleinen Gewichtungsfaktor ein Phasenausgleich nur dann, wenn mehrere Lösungen des Optimierungsproblems vorliegen. Für einen numerisch großen Gewichtungsfaktor hat der Phasendifferenzterm einen deutlichen Einfluss, sodass bestimmte Phasen gegenüber den weiteren Phasen für den Energieaustausch bevorzugt werden.

Durch die vorliegende Erfindung können lokale Energiesysteme unter Berücksichtigung des Phasenanschlusses jeder Anlage sicherer und verlässlicher betrieben werden. Durch die Minimierung der Phasenabweichung durch den Phasendifferenzterm wird bei der Steuerung ein Phasenausgleich sichergestellt, der für den Betrieb des Stromnetzes von größter technischer Bedeutung ist. Durch die vorliegende Erfindung kann weiterhin eine Installation von kostenintensiven Betriebsmitteln, wie beispielsweise Phasenschalter und/oder Phasenausgleicher, reduziert und bestenfalls vermieden werden. Weiterhin können aufwendige Netzausbauten reduziert oder vermieden werden, da bereits ohne zusätzliche Investitionen ein Phasenausgleich und ein effizienter Netzbetrieb durch die vorliegende erfindungsgemäße Steuerung erreicht werden können.

Weiterhin erfordert die vorliegende Erfindung einen geringen Implementierungsaufwand, da es zusätzlich zu bereits bestehenden lokalen Steuerungen beziehungsweise Steuereinheiten, beispielsweise für lokale Energiemärkte, implementiert werden kann. Bekannte Steuerungen basieren häufig bereits auf einem Optimierungsproblem. Insbesondere ist die vorliegende Erfindung besonders für den Betrieb von lokalen Energiemärkten vorteilhaft. Das ist deshalb der Fall, da typischerweise eine Steuervorrichtung des lokalen Energiemarktes ein Optimierungsverfahren zur Ermittlung der auszutauschenden Energien/Leistungen durchführt. Hierbei kann der Phasendifferenzterm im Sinne der vorliegenden Erfindung berücksichtigt werden. Somit werden basierend auf den Informationen der Angebote der Teilnehmer (Energiesysteme) die auszutauschenden Leistungen unter Berücksichtigung der technisch vorteilhaften Symmetrie der Phasen ermittelt. Mit anderen Worten umfasst eine erfindungsgemäße lokale Energiemarktplattform eine Steuereinheit gemäß der vorliegenden Erfindung. Dadurch ist die erfindungsgemäße Energiemarktplattform zur Durchführung des Verfahrens gemäß der vorliegenden Erfindung und/oder einer ihrer Ausgestaltungen ausgebildet. Durch die erfindungsgemäße Energiemarktplattform wird somit ein kosteneffizienter Betrieb lokaler Energiesysteme aufrechterhalten, während die Stromversorgungsqualität, die technischen Anforderungen und die technischen Sicherheitsaspekte über den Phasendifferenzterm berücksichtigt werden.

Die erfindungsgemäße Steuereinheit zur Steuerung eines oder mehrerer elektrischer Energieaustausche zwischen mehreren Anlagen, wobei jede Anlage an einer oder mehreren Phasen $A,B,C$ eines dreiphasigen Stromnetzes angeschlossen ist, wobei weiterhin die Steuereinheit zur Steuerung der Energieaustausche innerhalb eines Zeitbereiches $T$ dazu ausgebildet ist, für jede der Phasen $A,B,C$ und für jede der Anlagen zugehörige auszutauschende zeitabhängige Leistungen mittels eines Optimierungsverfahrens durch ein Extremalisieren einer Zielfunktion zu ermitteln, ist dadurch gekennzeichnet, dass die Zielfunktion eine Phasendifferenz

$$\sum_{t \in T} g(|P_t^A - P_t^B| + |P_t^B - P_t^C| + |P_t^C - P_t^A|)$$

als Term umfasst, wobei $P_t^{A,B,C}$ jeweils die Summe aller über die jeweilige Phase $A,B,C$ zum Zeitpunkt $t$ auszutauschenden Leistungen, und $g > 0$ ein Gewichtungsfaktor ist.

Es ergeben sich zum erfindungsgemäßen Verfahren gleichartige und gleichwertige Vorteile und/oder Ausgestaltungen.

Gemäß einer vorteilhaften Ausgestaltung der Erfindung werden die ermittelten Leistungen zum jeweiligen Zeitpunkt $t$ über die jeweilige Phase $A,B,C$ des Stromnetzes ausgetauscht.

Mit anderen Worten werden die Energieaustausche gemäß den ermittelten Leistungen durchgeführt. Hierbei kann die Steuereinheit die ermittelten Leistungen an die Anlagen und/oder ihre Energiesysteme übermitteln, beispielsweise als Sollwerte. Lokale Steuereinheiten der Energiesysteme und/oder der Anlagen steuern entsprechend den ermittelten Leistungen dann die Anlagen. Mit anderen Worten ist die Steuereinheit dazu ausgebildet, die jeweiligen Leistungen der jeweiligen Phase $A,B,C$ der Anlagen gemäß den durch das Optimierungsverfahren ermittelten Leistungen einzustellen.

In einer vorteilhaften Weiterbildung der Erfindung werden die durch das Optimierungsverfahren und für den Energieaustausch vorgesehenen Phasen $A,B,C$ an den jeweiligen Anlagen eingestellt.

Nach der Optimierung ist ermittelt, welche Anlage über welche Phase zu welchem Zeitpunkt welche Leistung in das Stromnetz einspeist oder ausspeist. Mit anderen Worten legt das Optimierungsergebnis die zeitabhängigen Leistungen und die zugehörige Phase fest. Hierbei kann es erforderlich sein, dass die Phase einer Anlage umgeschaltet, das heißt eingestellt wird. Dies kann beispielsweise mittels eines Phasenschalters erfolgen. Kann eine Anlage lediglich an einer Phase betrieben werden, so könnte es passieren, dass diese aufgrund der Phasenasymmetrie zu einem oder mehreren Zeitpunkten keine Leistung bereitstellen oder verbrauchen darf. Dies wird vorteilhafterweise durch ein Umschalten und somit durch ein Einstellen der Phasen verhindert. Dadurch ergibt sich sinnbildlich mehr Spielraum, der vorteilhafterweise für einen Phasenausgleich verwendet werden kann. Ein Umschalten der Phasen mehrerer Anlagen eines Energiesystems ist ebenfalls vorgesehen.

Gemäß einer vorteilhaften Ausgestaltung der Erfindung wird durch die Zielfunktion ein zu maximierender Austauschterm umfasst, wobei durch den Austauschterm die zwischen den Anlagen ausgetauschte Energiemenge maximiert wird.

Mit anderen Worten weist die Zielfunktion bevorzugt zwei Terme auf, den Phasendifferenzterm und den Austauschterm. Der Austauschterm modelliert die Gesamtenergiemenge, die innerhalb des Zeitbereiches $T$ ausgetauscht wird. Hierbei ist der Austauschterm von den Leistungen der Anlagen abhängig, das heißt die Leistungen der Anlagen bilden die Variablen der Zielfunktion und des Optimierungsproblems aus. Hierbei ist der Austauschterm bevorzugt durch eine Linearkombination der Leistungen der Anlagen gebildet. Typischerweise wird der Austauschterm maximiert und der Phasendifferenzterm minimiert, sodass diese ein verschiedenes Vorzeichen innerhalb der Zielfunktion aufweisen. Für einen lokalen Energiemarkt wird der Austauschterm ebenfalls als sozialer Wohlstand bezeichnet (englisch: Social Welfare).

In einer vorteilhaften Weiterbildung der Erfindung werden die Phasen $A,B,C,$ an welchen die jeweilige Anlage angeschlossen sind, an die Steuereinheit übermittelt.

Dadurch ist die Steuereinheit, die die Optimierung und somit das Ermitteln der auszutauschenden Leistungen durchführt, vorteilhafterweise in Kenntnis darüber, welche Anlage an welcher Phase angeschlossen ist. Die Phasenanschlüsse der Anlagen können vorteilhafterweise bei der Optimierung berücksichtigt werden.

Gemäß einer vorteilhaften Ausgestaltung der Erfindung wird vorab dem Optimierungsverfahren für jede der Anlagen eine oder mehrere maximale Leistungen sowie eine innerhalb des Zeitbereiches $T$ maximale auszutauschende Energiemenge an die Steuereinheit übermittelt und beim Optimierungsverfahren als Nebenbedingungen berücksichtigt.

Hierzu kann die Steuereinheit bevorzugt ein Kommunikationsmodul zum Datenaustausch mit den Anlagen und/oder den Energiesystemen umfassen.

Typischerweise weisen Optimierungsverfahren mehrere Nebenbedingungen auf. Vorteilhafterweise werden vorliegend wenigstens die maximale Leistung der Anlage sowie die maximal innerhalb des Zeitbereiches $T$ auszutauschende Energiemenge bei der Optimierung als Nebenbedingung berücksichtigt. Dadurch ist vorteilhafterweise sichergestellt, dass technische Randbedingungen der Anlagen durch das Ergebnis der Optimierung eingehalten werden. Zudem wird beispielsweise bei einem lokalen Energiemarkt diesem vorab mitgeteilt, insbesondere über Angebote, welche Energiemenge ausgetauscht werden soll. Somit kann das Verfahren noch effizienter und einfacher in einen bestehenden lokalen Energiemarkt integriert werden.

In einer vorteilhaften Weiterbildung der Erfindung sind die Anlagen als Photovoltaikanlagen, Energiespeicher, Ladesäulen, elektrische Fahrzeuge und/oder Wärmepumpen ausgebildet.

Das Verfahren gemäß der vorliegenden Erfindung und/oder einer ihrer Ausgestaltungen ist besonders für die genannten Anlagen beziehungsweise für Energiesysteme, die eine oder mehrerer der genannten Anlagen umfassen, vorteilhaft. Die genannten Anlagen weisen typischerweise eine größere Volatilität bezüglich ihrer Erzeugung oder ihres Verbrauchs auf, sodass für diese LCT-Anlagen ein Phasenausgleich technisch erforderlich ist. Dieser technisch vorteilhafte Phasenausgleich wird durch das vorliegende Verfahren und/oder eine seiner Ausgestaltungen ermöglicht. Somit ist das Verfahren insbesondere für lokale Energiemärkte vorteilhaft, die eine größere Anzahl von LCT-Anlagen aufweisen.

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur schematisiert mehrere Energiesysteme mit mehreren Anlagen, deren Energieaustausche gemäß einer Ausgestaltung der vorliegenden Erfindung gesteuert werden.

Gleichartige, gleichwertige oder gleichwirkende Elemente können in der Figur mit denselben Bezugszeichen versehen sein.

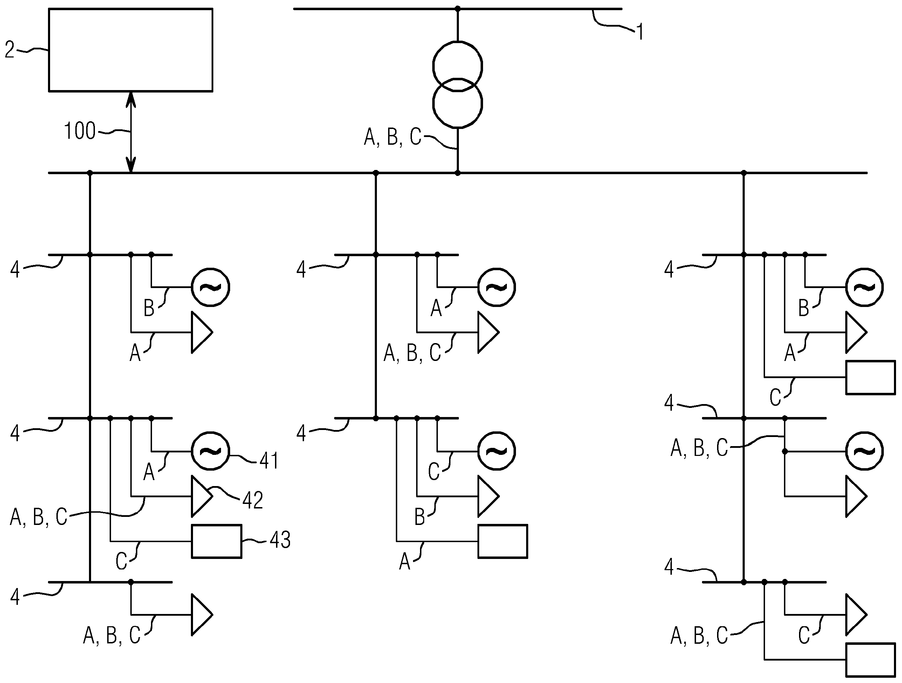

Die Figur 1 zeigt eine Steuereinheit 2 gemäß einer Ausgestaltung der vorliegenden Erfindung.

Die Steuereinheit 2 ist dazu ausgebildet, einen oder mehrere Energieaustausche zwischen mehreren Energiesystemen 4 zu steuern. Hierbei erfolgen die Energieaustausche über ein dreiphasiges Stromnetz 1. Das Stromnetz 1 weist somit drei Phasen A,B,C auf.

Die Energiesysteme 4 weisen eine oder mehrere energetische Anlagen 41, 42, 42 auf. Aus Gründen der Übersicht sind lediglich für eines der dargestellten Energiesysteme 4 die Anlagen mit den Bezugszeichen 41, 42, 43 versehen.

Die Energiesysteme 4, beispielsweise Wohngebäude, sind an das Stromnetz 1 angeschlossen. Weiterhin sind die Anlagen 41, 42, 43, beispielsweise über den Netzanschlusspunkt ihres Energiesystems 4, an das Stromnetz 1 angeschlossen. Die Anlagen 41, 42, 43 können somit zu jeweils einem Zeitpunkt eine bestimmte Leistung in das Stromnetz 1 einspeisen (Erzeuger) und/oder aus diesem ausspeisen (Verbraucher).

Die Anlagen 41, 42, 43 sind an einer oder mehreren Phasen A,B,C des Stromnetzes 1 angeschlossen. Mit anderen Worten kann grundsätzlich ein Energieaustausch über eine oder mehrere Phasen A,B,C des Stromnetzes 1 erfolgen. Der jeweilige Phasenanschluss einer Anlage 41, 42, 43 ist in der Figur mit den Buchstaben A,B,C gekennzeichnet.

Die Steuereinheit 2 steuert die Energieaustausche zwischen den Energiesystemen 4 und somit zwischen den Anlagen 41, 42, 43 der Energiesysteme 4. Hierzu weist die Steuereinheit 2 ein nicht dargestelltes Kommunikationsmodul auf. Mittels des Kommunikationsmoduls kann die Steuereinheit 1 Daten beziehungsweise Informationen mit den Energiesystemen 4 und/oder den Anlagen 41, 42, 43 austauschen. Der Datenaustausch ist in der Figur mit dem Doppelpfeil 100 vereinfacht symbolisiert. Insbesondere können dadurch berechnete Sollwerte für die jeweiligen Leistungen an die einzelnen Anlagen übertragen werden. Die lokalen Anlagen 41, 42, 43 werden dann entsprechend den übertragenden Sollwerten betrieben.

Gemäß der vorliegenden Erfindung ermittelt die Steuereinheit 2 die Sollwerte für die innerhalb eines Zeitbereiches $T$ auszutauschenden Leistungen mittels einem Optimierungsverfahren, bei welchem eine Zielfunktion extremalisiert wird. Dies kann mittels einer Recheneinheit der Steuereinheit 2 erfolgen. Durch das Extremalisieren werden die auszutauschenden Leistungen (Sollwerte) ermittelt. Hierbei umfasst die Zielfunktion erfindungsgemäß den Phasendifferenzterm $\sum_{t \in T} g(|P_t^A - P_t^B| + |P_t^B - P_t^C| + |P_t^C - P_t^A|)$ , wobei $P_t^{A,B,C}$ jeweils die Summe aller über die jeweilige Phase A,B,C zum Zeitpunkt $t$ auszutauschenden Leistungen, und g > 0 ein Gewichtungsfaktor ist. Durch den Phasendifferenzterm in der Zielfunktion wird eine ausreichende Phasensymmetrie bei den Energieaustauschen sichergestellt. Mit anderen Worten werden die auszutauschenden Leistungen derart ermittelt, dass die Phasenasymmetrie zwischen den Phasen A,B,C des Stromnetzes 1 für die tatsächlichen Energieaustausche minimiert wird. Es ist eine Erkenntnis der vorliegenden Erfindung, dass dieses technische Ziel durch die Berücksichtigung des obenstehend genannten Phasendifferenzterms ermöglicht wird. Dies soll mittels des folgenden Ausführungsbeispiels verdeutlicht werden.

Gemäß dem Ausführungsbeispiel sei, falls keine Optimierung durchgeführt wird, zu einem ersten Zeitpunkt innerhalb des Zeitbereiches $T$ ein Überschuss an Energie in der Phase A und zu einem späteren zweiten Zeitpunkt ein erhöhter Verbrauch, das heißt eine erhöhte Last, in derselben Phase A vorhanden. Wird nun die Optimierung gemäß der vorliegenden Erfindung durchgeführt, so könnten zum ersten Zeitpunkt mehrere flexible Lasten, wie beispielsweise Batteriespeicher und/oder elektrische Fahrzeuge auf die Phase A gelegt werden, sodass die überschüssige Energie für diese verwendet wird. Zum zweiten Zeitpunkt könnten durch ein Umschalten der Phasen A,B,C zusätzliche Einspeiser, beispielsweise Batteriespeicher, in die Phase A einspeisen und/oder die Last flexibler Verbraucher auf einen späteren Zeitpunkt verschoben werden. Darüber hinaus könnten Phasenschalter oder Anlagen mit flexiblem Phasenanschluss (verbunden mit mehr als einer Phase) Flexibilität bieten, indem die Phasen A,B,C gemäß dem Ergebnis der Optimierung geschaltet werden. Dies wird durch die Zielfunktionen beziehungsweise den erfindungsgemäßen Phasenausgleichsterm ermöglicht. Somit kann die lokal ausgetauschte Energiemenge maximiert werden, während die Abweichung zwischen den Phasen A,B,C möglichst minimal gehalten wird.

Weiterhin ist die vorliegende Erfindung besonders für lokale Energiemärkte vorteilhaft. Hierbei bildet die Steuereinheit 2 eine lokale Energiemarktplattform aus. Allerdings sind bekannte lokale Energiemärkte typischerweise marktgesteuert, das heißt für das Ermitteln der Energieaustausche sind im Wesentlichen Marktgrößen, wie beispielsweise Preise, maßgeblich. Vorliegend würde eine davon abweichende zusätzliche technische Steuerung erfolgen, demnach die marktabhängig ermittelten Energieaustausche mit einer möglichst großen Phasensymmetrie erfolgen. Mit anderen Worten berücksichtigt ein erfindungsgemäß ausgebildeter lokaler Energiemarkt das technische Erfordernis einer möglichst großen Phasensymmetrie zwischen den Phasen A,B,C des Stromnetzes 1.

Beispielsweise übermitteln zwei Elektrofahrzeuge zweier Energiesysteme 4 ein Angebot für einen Kauf einer bestimmten Energiemenge innerhalb eines Zeitbereiches *T* zum Laden an die Steuereinheit 2. Weiterhin wird eine jeweilige maximale Ladeleistung an die Steuereinheit 2 übermittelt. Weiterhin sei eines der Elektrofahrzeuge an der Phase *A* und das weitere der Elektrofahrzeuge an der Phase *B* angeschlossen. Grundsätzlich muss die Energiemenge, die jeweils zum Laden vorgesehen ist, lediglich über den Zeitbereich *T* bereitgestellt werden. Mit anderen Worten muss lediglich $\sum_{t=0}^{T} P_t = E$ für die zeitabhängigen $P_t$ Leistungen erfüllt sein, wobei *E* die übermittelte Energiemenge ist. Zu welchem Zeitpunkt welche Leistung genau zum Laden verwendet wird, ist zunächst unerheblich, solange die maximale Ladeleistung über den gesamten Zeitbereich *T* nicht überschritten wird. Dies kann durch entsprechende Nebenbedingungen bei der Optimierung sichergestellt werden.

Dadurch ist für solche Anlagen, wie beispielsweise Elektrofahrzeuge beziehungsweise Ladesäulen, eine grundsätzliche Flexibilität vorhanden, die für den Phasenausgleich verwendet werden kann. Wenn beispielsweise zu einem Zeitpunkt die Phase *C* im Vergleich zur Phase *B* und Phase *A* überlastet werden würde, so würde die Optimierung eine Erhöhung der Last in Phase *A,* beispielsweise das Laden des Elektrofahrzeuges an Phase *A,* gegenüber der Versorgung der Lasten mittels der Phase *C* bevorzugen. Dieser technisch vorteilhafte Phasenausgleich zwischen den Phasen *A,B,C* wird durch den Phasendifferenzterm beziehungsweise Phasenausgleichsterm innerhalb der Zielfunktion und somit durch die erfindungsgemäße Steuerung ermöglicht.

Weiterhin ist der erfindungsgemäß vorgesehene Gewichtungsfaktor *g* innerhalb des Phasendifferenzterms für einen lokalen Energiemarkt vorteilhaft. Für kleine Gewichtungsfaktoren erfolgt typischerweise nur dann ein Phasenausgleich, wenn grundsätzlich mehrere Ergebnisse für die Maximierung der ausgetauschten Gesamtenergiemenge vorliegen. Das ist deshalb der Fall, da es bei der Maximierung der ausgetauschten Gesamtenergiemenge unerheblich ist, über welche Phase diese erfolgt. Der zusätzliche Phasendifferenzterm führt somit für einen kleinen Gewichtungsfaktor lediglich zu einem geringen Ausgleich zwischen den Phasen. Wenn es beispielsweise für die Phasenbilanz positiv wäre, dass mittels der Phase *A* geladen würde, so führt die Zielfunktion mit dem Phasendifferenzterm selbst für kleine Gewichtungsfaktoren typsicherweise direkt zu dem Ergebnis über die Phase *A* zu laden. Höhere Gewichtungsfaktoren vermögen hingegen die für das Laden vorgesehene Phase direkt zu beeinflussen. Im Rahmen eines lokalen Energiemarktes gilt dies auch dann, wenn für das Laden mit den weiteren Phasen höhere Kosten verbunden sind. Beispielsweise sind für das Laden über die Phase *A* 32 Cent/kWh vorgesehen. Für das Laden über die Phase *B* seien beispielsweise 30 Cent/kWh vorgesehen. Bekannte lokale Energiemarktplattformen würden somit über die Phase *A* laden. Vorliegend kann ein Gewichtungsfaktor ***g/Δt*** mit einem Wert größer oder gleich 2 Cent/kWh einen Phasenausgleich bevorzugen. Hierbei ist *Δt* die Zeitschrittweite der Diskretisierung des Zeitbereiches *T,* beispielsweise 15 Minuten (96 Zeitschritte) für einen Tag. Mit anderen Worten ermöglicht es der Gewichtungsfaktor sich sozusagen über das reine Marktergebnis hinwegzusetzen und die technischen Anforderungen der Phasensymmetrie gegenüber reinen marktwirtschaftlichen Erwägungen stärker zu gewichten. Dadurch wird ein lokaler Energiemarkt bereitgestellt, der das technische Erfordernis einer hohen Phasensymmetrie im Handel technisch umsetzt.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

1      Stromnetz
2      Steuereinheit
4      Energiesysteme
41     Anlage
42     Anlage
43     Anlage
100    Datenaustausch

**Patentansprüche**

**1.** Verfahren zur Steuerung eines oder mehrerer Energieaustausche zwischen mehreren Anlagen (41, 42, 43) mittels einer Steuereinheit (2), wobei jede Anlage (41, 42, 43) an einer oder mehreren Phasen *A,B,C* eines dreiphasigen Stromnetzes (1) angeschlossen ist, wobei die Steuereinheit (2) zur Steuerung der Energieaustausche innerhalb eines Zeitbereiches *T* für jede der Phasen *A,B,C* und für jede der Anlagen (41, 42, 43) zugehörige auszutauschende zeitabhängige Leistungen mittels eines Optimierungsverfahrens durch ein Extremalisieren einer Zielfunktion ermittelt, **gekennzeichnet dadurch, dass** durch die Zielfunktion eine Phasendifferenz

$$\sum_{t\in T} g(|P_t^A - P_t^B| + |P_t^B - P_t^C| + |P_t^C - P_t^A|)$$

als Term umfasst wird, wobei $P_t^{A,B,C}$ jeweils die Summe aller über die jeweilige Phase *A,B,C* zum Zeitpunkt *t* auszutauschenden Leistungen, und *g* > 0 ein Gewichtungsfaktor ist.

2. Verfahren gemäß Anspruch 1, **gekennzeichnet dadurch, dass** die ermittelten Leistungen zum jeweiligen Zeitpunkt *t* über die jeweilige Phase *A,B,C* des Stromnetzes (1) ausgetauscht werden.

3. Verfahren gemäß Anspruch 1 oder 2, **gekennzeichnet dadurch, dass** die durch das Optimierungsverfahren und für den Energieaustausch vorgesehenen Phasen *A,B,C* an den jeweiligen Anlagen eingestellt werden.

4. Verfahren gemäß einem der vorhergehenden Ansprüche, **gekennzeichnet dadurch, dass** durch die Zielfunktion ein zu maximierender Austauschterm umfasst wird, wobei durch den Austauschterm die zwischen den Anlagen (41, 42, 43) ausgetauschte Energiemenge maximiert wird.

5. Verfahren gemäß einem der vorhergehenden Ansprüche, **gekennzeichnet dadurch, dass** die Phasen *A,B,C,* an welchen die jeweilige Anlage (41, 42, 43) angeschlossen ist, an die Steuereinheit (2) übermittelt werden.

6. Verfahren gemäß einem der vorhergehenden Ansprüche, **gekennzeichnet dadurch, dass** vorab dem Optimierungsverfahren für jede der Anlagen (41, 42, 43) eine oder mehrere maximale Leistungen sowie eine innerhalb des Zeitbereiches *T* maximale auszutauschende Energiemenge an die Steuereinheit (2) übermittelt und beim Optimierungsverfahren als Nebenbedingungen berücksichtigt werden.

7. Verfahren gemäß einem der vorhergehenden Ansprüche, **gekennzeichnet dadurch, dass** die Anlagen (41, 42, 43) als Photovoltaikanlagen, Energiespeicher, Ladesäulen, elektrische Fahrzeuge und/oder Wärmepumpen ausgebildet sind.

8. Steuereinheit (2) zur Steuerung eines oder mehrerer Energieaustausche zwischen mehreren Anlagen (41, 42, 43), wobei jede Anlage (41, 42, 43) an einer oder mehreren Phasen *A,B,C* eines dreiphasigen Stromnetzes (1) angeschlossen ist, wobei die Steuereinheit (2) zur Steuerung der Energieaustausche innerhalb eines Zeitbereiches *T* dazu ausgebildet ist, für jede der Phasen *A,B,C* und für jede der Anlagen (41, 42, 43) zugehörige auszutauschende zeitabhängige Leistungen mittels eines Optimierungsverfahrens durch ein Extremalisieren einer Zielfunktion zu ermitteln, **dadurch gekennzeichnet, dass** die Zielfunktion eine Phasendifferenz

$$\sum_{t\in T} g(|P_t^A - P_t^B| + |P_t^B - P_t^C| + |P_t^C - P_t^A|)$$

als Term umfasst, wobei $P_t^{A,B,C}$ jeweils die Summe aller über die jeweilige Phase *A,B,C* zum Zeitpunkt *t* auszutauschenden Leistungen, und *g* > 0 ein Gewichtungsfaktor ist.

9. Steuereinheit (2) gemäß Anspruch 8, **dadurch gekennzeichnet, dass** diese ein Kommunikationsmodul zum Datenaustausch mit den Anlagen (41, 42, 43) umfasst.

10. Steuereinheit (2) gemäß Anspruch 8 oder 9, **dadurch gekennzeichnet, dass** diese dazu ausgebildet ist, die jeweiligen Leistungen der jeweiligen Phase *A,B,C* der Anlagen (41, 42, 43) gemäß den durch das Optimierungsverfahren ermittelten Leistungen einzustellen.

**Claims**

1. Method for controlling one or more exchanges of energy between a plurality of installations (41, 42, 43) by means of a control unit (2), wherein each installation (41, 42, 43) is connected to one or more phases *A,B,C* of a three-phase power grid (1), wherein the control unit (2) for controlling the exchanges of energy determines, within a time range *T* for each of the phases *A,B,C* and for each of the installations (41, 42, 43), associated time-dependent powers to be exchanged by means of an optimization method by extremalizing a target function, **characterized in that** the target function includes a phase difference

$$\sum_{t \in T} g(|P_t^A - P_t^B| + |P_t^B - P_t^C| + |P_t^C - P_t^A|)$$

as a term, where $P_t^{A,B,C}$ is in each case the sum of all powers to be exchanged via the respective phase *A,B,C* at the time *t,* and *9 > 0* is a weighting factor.

2. Method according to Claim 1, **characterized in that** the determined powers are exchanged at the respective time *t* via the respective phase *A,B,C* of the power grid (1).

3. Method according to Claim 1 or 2, **characterized in that** the phases *A,B,C* provided by the optimization method and for the exchange of energy are set on the respective installations.

4. Method according to any one of the preceding claims, **characterized in that** the target function comprises an exchange term to be maximized, wherein the exchange term maximizes the amount of energy exchanged between the installations (41, 42, 43).

5. Method according to any one of the preceding claims, **characterized in that** the phases *A,B,C,* to which the respective installation (41, 42, 43) is connected, are transmitted to the control unit (2).

6. Method according to any one of the preceding claims, **characterized in that** one or more maximum powers and a maximum amount of energy to be exchanged within the time range *T are* transmitted to the control unit (2) in advance of the optimization method for each of the installations (41, 42, 43) and are taken into account in the optimization method as secondary conditions.

7. Method according to any one of the preceding claims, **characterized in that** the installations (41, 42, 43) are in the form of photovoltaic installations, energy stores, charging stations, electric vehicles and/or heat pumps.

8. Control unit (2) for controlling one or more exchanges of energy between a plurality of installations (41, 42, 43), wherein each installation (41, 42, 43) is connected to one or more phases *A,B,C* of a three-phase power grid (1), wherein the control unit (2) for controlling the exchanges of energy is designed to determine, within a time range *T* for each of the phases *A,B,C* and for each of the installations (41, 42, 43), associated time-dependent powers to be exchanged by means of an optimization method by extremalizing a target function, **characterized in that** the target function includes a phase difference

$$\sum_{t \in T} g(|P_t^A - P_t^B| + |P_t^B - P_t^C| + |P_t^C - P_t^A|)$$

as a term, where $P_t^{A,B,C}$ is in each case the sum of all powers to be exchanged via the respective phase *A,B,C* at the time *t,* and *g > 0* is a weighting factor.

9. Control unit (2) according to Claim 8, **characterized in that** it comprises a communication module for exchanging data with the installations (41, 42, 43).

10. Control unit (2) according to Claim 8 or 9, **characterized in that** it is designed to set the respective powers of the respective phase *A,B,C* of the installations (41, 42, 43) according to the powers determined by the optimization method.

**Revendications**

1. Procédé de commande d'un échange d'énergie ou de plusieurs échanges d'énergie entre plusieurs installations (41, 42, 43) au moyen d'une unité (2) de commande, dans lequel chaque installation (41, 42, 43) est raccordée à une phase ou à plusieurs phases *A, B, C* d'un réseau (1) de courant triphasé, dans lequel l'unité (2) de commande détermine, au moyen d'un procédé d'optimisation par une extrêmalisation d'une fonction cible, pour la commande des échanges d'énergie dans un laps *T* de temps pour chacune des phases *A, B, C* et pour chacune des installations (41, 42, 43), des puissances à échanger leur appartenant en fonction du temps, **caractérisé en ce que** par la fonction cible, une différence de phase

$$\sum_{t \in T} g(|P_t^A - P_t^B| + |P_t^B - P_t^C| + |P_t^C - P_t^A|)$$

est comprise comme terme, dans laquelle $P_t^{A,B,C}$ est respectivement la somme de toutes les puissances à échanger à l'instant *t* en passant par la phase *A, B, C* respective et *g* > 0 est un facteur de pondération.

2. Procédé suivant la revendication 1, **caractérisé en ce que** l'on échange les puissances déterminées à l'instant *t* respectif en passant par les phases *A, B, C* respectives du réseau (1) de courant.

3. Procédé suivant la revendication 1 ou 2, **caractérisé en ce que** l'on règle, sur les installations respectives, les phases *A, B, C* prévues par le procédé d'optimisation et pour l'échange d'énergie.

4. Procédé suivant l'une des revendications précédentes, **caractérisé en ce qu'**il est compris par la fonction cible un terme d'échange à rendre maximum, dans lequel par le terme d'échange on rend maximum la quantité d'énergie échangée entre les installations (41, 42, 43).

5. Procédé suivant l'une des revendications précédentes, **caractérisé en ce que** l'on détermine sur l'unité (2) de commande les phases *A, B, C,* auxquelles l'installation (41, 42, 43) respective est raccordée.

6. Procédé suivant l'une des revendications précédentes, caractérisé à ce qu'avant le procédé d'optimisation, on transmet à l'unité (2) de commande pour chacune des installations (41, 42, 43) une ou plusieurs puissances maximum ainsi qu'une quantité d'énergie maximum à échanger dans le laps *T* de temps et on en tient compte comme conditions secondaires dans le procédé d'optimisation.

7. Procédé suivant l'une des revendications précédentes, **caractérisé en ce que** les installations (41, 42, 43) sont constituées sous la forme d'installations photovoltaïques, d'accumulateurs d'énergie, de colonnes, de charge, de véhicules électriques et/ou de pompes à chaleur.

8. Unité (2) de commande pour la commande d'un échange d'énergie ou de plusieurs échanges d'énergie entre plusieurs installations (41, 42, 43), dans laquelle chaque installation (41, 42, 43) est raccordée à une phase ou à plusieurs phases *A, B, C* d'un réseau (1) de courant triphasé, dans laquelle l'unité (2) de commande détermine, au moyen d'un procédé d'optimisation par une extrêmalisation d'une fonction cible, pour la commande des échanges d'énergie dans un laps *T* de temps pour chacune des phases *A, B, C* et pour chacune des installations (41, 42, 43), des puissances à échanger leur appartenant en fonction du temps, **caractérisé en ce que** par la fonction cible, une différence de phase

$$\sum_{t \in T} g(|P_t^A - P_t^B| + |P_t^B - P_t^C| + |P_t^C - P_t^A|)$$

est comprise comme terme, dans laquelle $P_t^{A,B,C}$ est respectivement la somme de toutes les puissances à échanger à l'instant *t* en passant par la phase *A, B, C* respective et *g* > 0 est un facteur de pondération.

9. Unité (2) de commande suivant la revendication 8, **caractérisée en ce que** celle-ci comprend un module de communication pour l'échange de données avec les installations (41, 42, 43).

**10.** Unité (2) de commande suivant la revendication 8 ou 9, **caractérisée en ce que** celle-ci est constituée pour régler les puissances respective des phases *A, B, C* respectives des installations (41, 42, 43) suivant les puissances déterminées par le procédé d'optimisation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014031997 A1
- DE 102018222753 A1